(19) Europäisches Patentamt

European Patent Office

Office européen des brevets

(11) **EP 0 809 442 B1**

(12) **EUROPEAN PATENT SPECIFICATION**

(45) Date of publication and mention
of the grant of the patent:
**31.10.2001 Bulletin 2001/44**

(21) Application number: **96903569.0**

(22) Date of filing: **22.01.1996**

(51) Int Cl.7: **A23C 19/076**, A23C 19/09

(86) International application number:
**PCT/US96/00744**

(87) International publication number:
**WO 96/24254 (15.08.1996 Gazette 1996/37)**

(54) **PROCESS FOR MAKING SHELF STABLE DAIRY PRODUCTS**

VERFAHREN ZUR HERSTELLUNG VON LAGERSTABILEN MILCHPRODUKTEN

PROCEDE POUR FABRIQUER DES PRODUITS LAITIERS LONGUE CONSERVATION

(84) Designated Contracting States:
**DE ES FR GB GR IE IT SE**

(30) Priority: **07.02.1995 US 384784**

(43) Date of publication of application:
**03.12.1997 Bulletin 1997/49**

(73) Proprietor: **THE PILLSBURY COMPANY**
**Minneapolis, MN 55402-1464 (US)**

(72) Inventors:
 • **EL-HMAMSI, Mounir, Mohamed**
  **Minneapolis, MN 55418 (US)**
 • **CICHA, Douglas, Ray**
  **East Bethel, MN 55005 (US)**
 • **BRIGL, Lawrence, Paul**
  **Brooklyn Park, MN 55428 (US)**
 • **BHATIA, Usha, B.**
  **Roseville, MN 55112 (US)**
 • **YOUNG, Robert, Yao, Jou**
  **Robbinsdale, MN 55422 (US)**

(74) Representative: **Belcher, Simon James et al**
**Urquhart-Dykes & Lord**
**Tower House**
**Merrion Way**
**Leeds LS2 8PA (GB)**

(56) References cited:
**EP-A- 0 340 035**        **WO-A-93/19613**
**WO-A-95/04468**        **FR-A- 993 302**
**GB-A- 2 032 241**        **GB-A- 2 056 839**
**US-A- 3 929 892**        **US-A- 4 163 806**
**US-A- 4 795 650**

 • **DATABASE FSTA INTERNATIONAL FOOD INFORMATION SERVICE (IFIS), FRANFURT/MAIN, DE 86(01):P0054, D. SCMIDT: "Microbiological and sensory characteristics of a home style confectionary product prepared with cream cheese" XP002005251 & JOURNAL OF FOOD QUALITY , vol. 7, no. 4, 1985, pages 283-288,**
 • **ANNALES DE LA NUTRITION ET DE L'ALIMENTATION, vol. 32, no. 2-3, 1978, pages 597-615, XP002005296 C. CHEFTEL ET AL.: "Aliments à humidité intermédiaire: gels polysaccharidiques et protéiques "**

EP 0 809 442 B1

## Description

The invention generally relates to shelf stable dairy products and methods of making the same. In particular, the invention is directed toward making shelf stable dairy products, such as cream cheeses and cream cheese fillings, using real cream cheese and methods of making the same.

## Background of the Invention

Cream cheese is a mild, acid-coagulated uncured cheese made of dairy components, such as cream and milk. Cream cheese is normally stored under refrigerated conditions to prevent spoilage. The texture and body of cream cheese at refrigeration temperatures is typically smooth and firm, such that the cream cheese can be sliced. However, cream cheese under refrigerated conditions is typically not soft or readily spreadable, and it cannot readily be applied to a soft or brittle substrate.

Due to the stringent storage requirements of most foods that contain a cream cheese, such as danishes and other baked goods, real cream cheese typically is not utilized in these products as it is susceptible to spoiling and becoming organoleptically unsatisfactory to the end consumer. Such products, therefore, usually contain imitation cream cheese. In order to remain shelf stable, imitation cream cheese does not usually contain a substantial amount of real cream cheese. In addition, substantial amounts of real cream cheese are typically not used in imitation dairy products because at refrigerated temperatures the texture and body of real cream cheese is too firm to process, and at higher temperatures the cream cheese melts, separates and loses its homogeneity. Thus, prior to the invention, use of substantial amounts of real cream cheese in dairy products has been limited.

US Patent 4,724,152 to Baker et al. discloses an imitation cream cheese product and method for making the same by admixing milk, a milk fat-containing carrier, and nonfat dry milk solids to form a dressing mixture. The product is made by heating and agitating the dressing mixture, adding a stabilizer to the mixture, mixing the mixture with cottage cheese curd, and homogenizing the cottage cheese curd mixture.

US Patent 5,180,604 to Crane et al. discloses a non-fat cream cheese product and method for making the same using a fermented skim milk retentate, dry cottage cheese curd, an emulsifying salt, non-fat dry milk, and a stabilizing system. US Patent 5,108,773 to Smith et al. discloses a method of making a non-fat cream cheese product using a microcrystalline cellulose, a source of concentrated skim milk, skim milk curd, spices, flavors, starch and a gum. US Patent 5,079,024 to Crane discloses a method of making a non-fat cream cheese product using a source of concentrated skim milk, an emulsifier salt, gums, and a bulking agent. US Patent 4,324,804 to Davis discloses a soft bodied cream cheese and method for making the same by mixing a cultured cream cheese dressing mix with a firm bodied cream cheese curd. US Patent 4,312,891 to Eisfeldt discloses a shelf stable fluid dessert product and methods of making the same by preparing a homogeneous mixture of a gum, starch, sweetener agent, and a protein source.

GB patent application GB-A-2056839 discloses a spreadable soft cream cheese. This is prepared by blending a cultured cream cheese dressing having at least 30% by weight of a substantially unhomogenised milk fat and not more than 60% moisture and then packaging at a temperature of at least 65.6°C.

US patent US-A-4795650 discloses a method of making extruded frozen cheesecake product. This is prepared by combining ingredients to form a stabilised dispersion of cream cheese, sour cream, cream, egg yolks, sweetener, water and flavours. This dispersion is then cooked in a pasteurising oven for no less then 160 seconds at 82°C. This is then homogenised at 68 to 71°C before being deairated, frozen and extruded to form a free standing structure.

EP 0340 035 discloses a soft processed cream cheese product. Water and condensed milk are combined together and pasteurised at 82% for 5 minutes, cooled to 22°C and lactic acid added. This mixture is then reheated to 79.4°C and blended with hot (71°C) cream cheese. Further ingredients are added and the mixture is then cooled and homogenised.

GB-A-2032241 discloses a stable dessert product and a method for manufacture thereof.

There is described a stable cheese filling comprising 53.7% cream cheese, 22.45% granulated sucrose 0.56% stock, 0.55% gelatin and 0.23% lactic acid. The cheese is mixed, heated to a pasteurisation temperature of 82°C then homogenised.

US-A-3929892 discloses a stable low fat cheese. This is prepared from dairy ingredients including cottage cheese curd, non-fat milk solids and a fat source. The curd and / or non-fat milk solids provide casein combined with heat dentured serum protein in sufficient amounts to provide the desired body and texture. The mix is heated to pasteurisation temperature between 60 and 82°C and then homogenised.

Amotes de la nutrition et de l'alimentation, vol 32, no. 2-3, 1978, pages 597-615 discloses a soft cheese comprising 55-60% emental cheese, 3% NaCl, 10-20% water. The cheese is mixed, heated to a pasteurisation temperature of between 65 and 70°C, homogenised and then cooled.

When compositions do incorporate a substantial amount of real cream cheese, typically, the dairy products are not shelf stable and must be refrigerated or packed in such a manner as to prevent spoilage prior to a consumer's end use. Utilization of real cream cheese adds flavour, texture, mouthfeel, and nutritional value to any given dairy product. Therefore, there is a need for a shelf stable dairy product, which contains a substantial amount of real cream cheese, and which is relatively simple to process.

## Summary of the Invention

The invention is directed toward a shelf stable dairy product and method for making the same. As used herein, the term "shelf stable" refers to a dairy product having the capability of withstanding ambient temperatures (for example, 25°C to 30°C) and pressures for about eight weeks without becoming organoleptically unsatisfactory to an end consumer. Dairy products add flavor, texture, mouthfeel, and nutritional value, among other qualities, to any given food product in which they are incorporated.

The claimed invention overcomes spoiling problems such as curdling and agglomeration of dairy protein sources as well as yest and mold growth in the dairy products. Generally, the dairy products of the invention comprise milk or other dairy sources of proteins. Examples or suitable dairy products are butter, cheese, cream cheese, milk, buttermilk, ice cream, and cream. In one preferred aspect, the invention is directed to a cheese, and most specifically to a cream cheese.

The dairy product of the claimed invention may contain, for example, a substantial amount of real cream cheese. The term "real cream cheese" as used herein refers to a soft unripened cheese made from a milk and cream mixture, which has been homogenized, pasteurized, cooled and set. Preferably, the real cream cheese has less than 55% by weight water and more than 33% by weight milk fat. Preferably, at least 50% and no more than 80% by weight of the dairy product is real cream cheese.

While the invention relates to any assortment of dairy products or dairy protein sources, the cream cheese product is the most preferred filling for the shelf stable dairy product of the invention. Exemplary concentrations for fillings in the context of this invention may be found in Table 1 of the specification with the understanding that any number of dairy protein sources could take the place of real cream cheese.

The dairy product of the invention is smooth with minimal lumps and has excellent organoleptic qualities such as physical appearance, body, taste, mouthfeel and flavor.

In general, because real cream cheese is used in the invention, processing temperatures are lower than processing temperatures used to make many dairy products. Using lower processing temperatures can save processing energy and time. Further, in accord with the invention most of the ingredients are mixed in one vessel, which limits the number of times the mixture must be transferred to additional vessels for admixing with other ingredients.

The invention is directed toward a method for making a shelf stable dairy product. The method includes the steps of: (a) heating a dairy product such as real cream cheese to a temperature of at least 32°C (90°F) and to not greater than 49°C (120°F) in a vessel in order to form a mixture; (b) admixing in the vessel a binder with the heated real cream cheese to form a mixture; (c) pumping the mixture through a blending means; and (d) homogenizing the mixture to form a shelf stable dairy product.

The cream cheese mixture, preferably, is then pumped through a mixing recycle loop between a vessel and a blending means by one or more pumps and return lines to assure a balanced distribution of the ingredients. The temperature of the cream cheese mixture can vary during this pumping process. Typically, the temperature of the cream cheese mixture rises above about 49°C (120°F). However, the temperature of the cream cheese mixture should not be allowed to rise to such a level that the mixture is significantly separated or denatured. Generally, the temperature at which the cream cheese mixture begins to significantly separate and denature is about 54°C (130°F).

The cream cheese mixture, preferably, is pumped from the mixing recycle loop into a holding vessel in a processing recycle loop. The processing recycle loop preferably includes a holding vessel, a homogenization system and a cooling system. While in the holding vessel, preferably the temperature of the cream cheese mixture is reduced, if necessary, to at least about 49°C (120°F). The cream cheese mixture can optionally be pumped through a deaeration system and/or a filtration system that can be included in the processing recycle loop.

The step of homogenization is preferably performed at a pressure of at least 6.2MPa (900 psi) and at a pressure not greater than 7.5MPa (1100 psi). More preferably, homogenization includes pumping the cream cheese mixture through a two stage homogenizer.

The cream cheese mixture is pumped through a cooling system. Preferably, the cooling system includes a heat exchanger and has the capability of cooling the cream cheese mixture to a temperature of at least 29°C (85°F) and to not less than 18°C (65°F).

The shelf stable dairy product of the present invention preferably includes: real cream cheese in an amount of from at least 50% by weight to 80% by weight of the cream cheese mixture, a preserving agent in an amount of from 0.05% by weight to 0.35% by weight of the cream cheese product, a binder in the form of a dry powder, and a binder in the form of a liquid.

As noted previously, the shelf stable dairy product of the present invention can be stored for extended periods of up to about eight weeks under ambient storage condition. Preferably, the dairy product is stored in a manner such that it will not be exposed to light. Reducing or preventing exposure to light reduces the effects of photooxidation of the product, which can decrease its shelf life or otherwise adversely affect the quality of the dairy product. In one embodiment, the dairy product is preferably stored in containers that are partially or totally impermeable to light.

The invention is also directed towards food products and methods of preparing a shelf stable dairy product filled food product, which includes preparing a shelf stable dairy product by a method of the invention, preparing a food product, which may be made of a flour-based dough, and putting the dairy product into the food product to form a dairy product filled food product. Examples of such dairy product filled food products include danishes, pastries, sweet or savory pies, and the like.

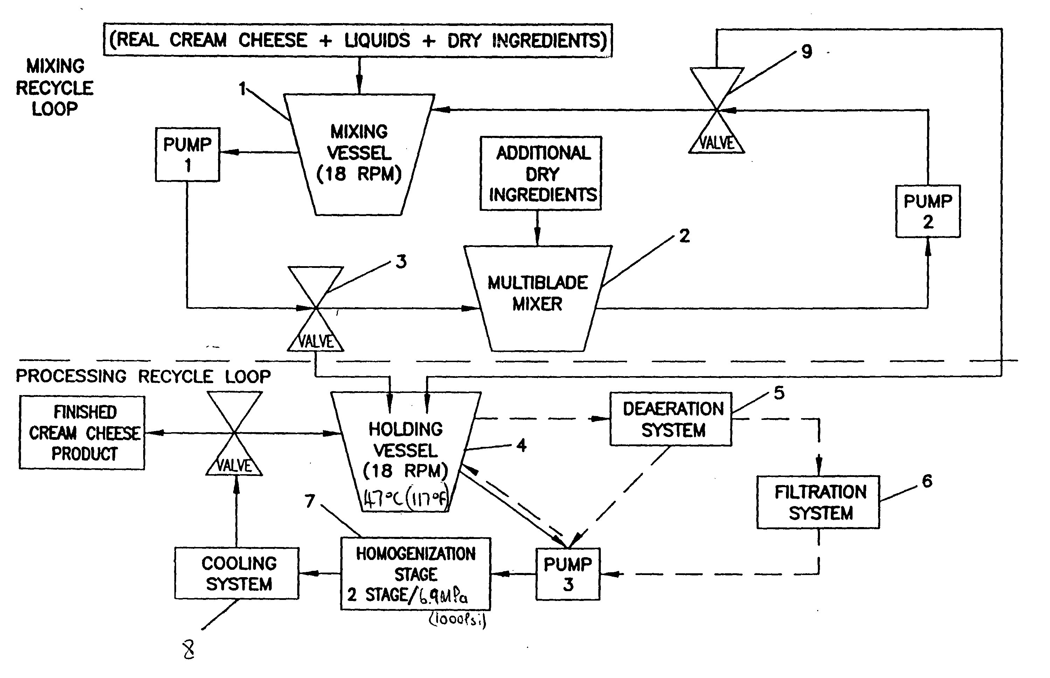

## Brief Description of the Drawing

The figure is a schematic representation of a preferred process for making a shelf stable dairy product in accord with the invention.

## Detailed Description of the Invention

The invention is directed toward shelf stable dairy products and methods for making the same. In general, the shelf stable dairy products of the invention include a substantial amount of dairy products such as cheeses, butter, milk, buttermilk, ice cream, and cream. Cheeses which may be used in conjunction with the claimed invention include cream cheeses, natural cheeses, cottage cheeses, and various other cheese curd and cheese products such as Colby, Gruyere, Limburger, Brie, and Neufchatel cheeses, among others. Preferably the invention comprises real cream cheese and various other optional ingredients such as a preserving agent, an acidulant, and water binders. The water binders should be added such that the water activity of the product ($A_w$) is less than about 0.91. Preferably, the water binders include sugars.

The methods for making the shelf stable dairy product include placing the source of dairy protein such as real cream cheese into a vessel, heating the cream cheese to at least 32°C (90°F), admixing water binders, an acidulant and a preserving agent into the cream cheese, and homogenizing the cream cheese mixture to form a shelf stable dairy product. The shelf stable dairy products of the invention are shelf stable, easily processable, uniform, and organoleptically satisfactory shelf stable dairy products.

As can be seen in the Figure, the process of the invention generally takes place between a mixing recycle loop and a processing recycle loop. Each of these loops will be discussed in turn.

## Mixing Recycle Loop

The purpose of the mixing recycle loop is to produce a blended, flowable cream cheese mixture which may be further processed to produce the finished shelf stable dairy product.

## Mixing Vessel

Turning to the Figure and in accord with the methods of the invention, real cream cheese is placed into a vessel 1 having mixing means. The mixing-vessel 1 is generally used to intermix dairy product, preferably the real cream cheese with other various ingredients that are included in the cream cheese mixture. These ingredients can include items such as binders and preserving agents.

Any sanitary food grade vessel having a mixing means such that the cream cheese can be uniformly mixed without significantly denaturing proteins contained in the real cream cheese is suitable for the invention. Preferably, a vessel having a swept surface, such as a swept surface kettle with a scraper for mixing means, is used.

In addition to having a mixing means, the mixing vessel 1 also has a heating means, such that the real cream cheese can be heated prior to the addition of any other ingredients to the vessel 1. The real cream cheese is heated in order to increase its processability. is heated in order to increase its processability. Generally, as the real cream cheese is heated it becomes more flowable for easier processing. Further, as the real cream cheese melts, some separation occurs generating liquid that can facilitate mixing the cream cheese with other ingredients that are included in the cream cheese mixture.

After being placed into the mixing vessel 1, as depicted in the Figure, the real cream cheese is mixed and heated in order to improve its processability. The cream cheese should not be heated and mixed in such a manner that it has a significant amount of protein denaturation and separation into its solid and liquid components. Preferably, the real cream cheese is heated to at least 32°C (90°F) and to not greater than 49°C (120°F). More preferably, the cream cheese is heated to at least 32°C (90°F)and to not greater than 43°C (110°F).

There are a variety of heating means usable in accord with the invention. For example, a steam jacket may be provided on the outside of the vessel or the vessel may include an inner heating element. Preferably, the real cream cheese is mixed and heated in a steam jacketed kettle, such as the Hamilton kettle available from Brighton Corporation in Cincinnati, Ohio. The real cream cheese should be heated and mixed until it is in a uniform and flowable state.

It is noted that, typically, a set point temperature for the heating means is established and maintained through out the processing of the cream cheese mixture in the mixing recycle loop. The temperature of the cream cheese or the cream cheese mixture as it is processed in the mixing vessel and in the mixing recycle loop tends to vary. Therefore, at any given time during processing the temperature of the real cream cheese or the cream cheese mixture could be higher or lower than the set point temperature. In order to compensate for this variance, the set point temperature may have to be adjusted or the cream cheese mixture may have to be removed from the mixing recycle loop and put into the processing recycle loop. Generally, in order to prevent significant denaturization and separation of the cream cheese or the cream cheese mixture, the temperature of the cream cheese or cream cheese mixture should not rise above about 60°C (140°F).

In general, the real cream cheese should not be mixed at such a high rate of speed that high shear is created in the vessel causing protein denaturization and separation of the cream cheese into its components. However, the real cream cheese should be mixed at a high enough rate of speed that it is uniformly mixed in a relatively short period of time. Preferably, a mixing means which provides low shear is used. Typically, the real cream cheese is heated and mixed for about 10 to about 35 minutes at a speed of about 15 to about 21 rpm using a swept surface steam jacketed kettle. Preferably the real cream cheese is heated and mixed for about 20 to about 30 minutes. More preferably, the cream cheese is heated and mixed for about 25-29 minutes at a speed of about 17 to about 20 rpm using a swept surface steam jacketed kettle.

In general, any type of real cream cheese can be mixed and heated in mixing vessel 1 in accordance with the invention. The current standard of identity for real cream cheese requires that the cream cheese contain at least about 33% milk fat and not greater than about 55% water by weight. Other types of cream cheese-like dairy products may be suitable for use in the invention, but preferably cream cheese having at least about 33% milk fat and not greater than about 55% water is used in the invention. Use of real cream cheese provides the shelf stable dairy product of the invention with the approximate texture, mouthfeel and organoleptic properties of real cream cheese.

The amount of real cream cheese used in the invention can vary with the desired end product. However, if too little cream cheese is used, the shelf stable dairy product will not have the organoleptic qualities associated with cream cheese, and if too much cream cheese is used, the shelf stable dairy product will not be shelf stable. Preferably, at least 55% by weight and not more than 80% by weight of the shelf stable dairy product is real cream cheese. More preferably, at least

60% by weight and not more than 70% by weight of the shelf stable dairy product is real cream cheese, and most preferably, at least 60%-65% real cream cheese.

In order to provide a shelf stable and organoleptically acceptable cream cheese product, the composition should have a water activity of less than about 0.91. Preferably, the $A_w$ ranges from about 0.75 to 0.91 and more preferably from about 0.80 to 0.89 for the cream cheese product. Water activity ($A_w$) is a measure of the unbound or free water available to support biological and chemical reactions in a system or particular environment. One means of measuring water activity is by dividing the vapor pressure of pure water at a particular temperature into the vapor pressure of water in the system or environment (i.e. in the shelf stable dairy product) at the same temperature. Lowering the water activity restricts the growth of many microbes and can be accomplished by lowering the vapor pressure of water in the shelf stable dairy product.

One means of lowering the vapor pressure of water in the shelf stable dairy product, and thus lowering the water activity, is to mix a water binder into the real cream cheese in order to absorb much of the free water in the product. The terms "binder" and "water binder" as used herein refer to a compound that absorbs water and limits the amount of free water in a mixture.

Once the real cream cheese is heated and uniformly mixed, a binder and a preserving agent are added to the mixing vessel 1 containing the real cream cheese. Any food grade type of binder capable of reducing the water activity of the shelf stable dairy product to below 0.91 is usable in the invention.

The overall amount of binder to be added to the composition generally varies with the type of shelf stable dairy product desired and the type of binder used. However, in general, if too much binder is added to the heated real cream cheese, then the mixture can become too dry and viscous and lose its processability. If too little binder is added to the heated real cream cheese, then the amount of free water can be at such a level that microbial growth is facilitated and the resulting product may not be homogeneous. Preferably, the overall amount of binder in a shelf stable dairy product of the invention is at least about 20% by weight and not more than about 49% by weight of the shelf stable dairy product. More preferably, the overall amount of binder in a shelf stable dairy product of the invention is at least about 20% by weight and not more than about 40% by weight of the shelf stable dairy product. Most preferably, the amount of binder in a shelf stable dairy product of the invention is at least about 25% by weight and not greater than about 35% by weight.

Examples of binders that can be used in the present invention include, for example, alcohols, saccharides or sugars, gums, salts, starches and mixtures thereof. Examples of usable alcohols include monohydric alcohols, diols, and/or polyols. More specifically, glycerol, propylene glycol, sorbitol, manitol, 1,2-propanediol, and/or mixtures thereof are useable in the invention. Examples of usable saccharides or sugars include monosaccharides, disaccharides, trisaccharides. More specifically, fructose, sucrose, glucose, dextrose, polydextrose, molasses, corn syrup, and/or mixtures thereof are useable binders in the invention. Sodium chloride, carboxymethylcellulose, guar gum, potassium polymetaphosphate, propionate, sodium lactate, monosodium glutamate, corn starch, glycerine, alginate, and/or mixtures thereof are also useable binders in the invention. Salts of any of the previously listed binders, any type of humectant and/or mixtures thereof are also useable as binders.

If the water binder comprises a humectant, preferably it is capable of depressing the freezing point of the cream cheese mixture to between about -34°C to -40°C -34 to -40°F Preferably, a binder that is also a sugar or sweetening agent is used in the invention. Fondant or powdered sugar and/or high fructose corn syrup are sugars and also water binders that are preferably used to enhance the organoleptic characteristics of the shelf stable dairy product. Typically, at least about 5% by weight and not greater than about 35% by weight of the shelf stable dairy product is water binders that are sweetening agents or sugars.

Preferably, one or more binders may be added to the mixing vessel 1 just after the real cream cheese is heated and mixed until flowable. At this stage in the mixing process, the temperature is typically high enough such that the real cream cheese is beginning to melt and separate in such a manner that a binder can be easily mixed into the real cream cheese. Further, once added, the binder can facilitate elimination of the liquid resulting from any separation that has occurred.

In a preferred embodiment of the invention, the following types of binders are included in the shelf stable dairy product in the following amounts: carboxymethylcellulose in an amount of from at least about 0.10% by weight to an amount of about 0.50% by weight of the shelf stable dairy product, glycerine in an amount of from at least about 1% by weight to an amount of about 10% by weight of the shelf stable dairy product, sugars in an amount of from at least about 5% by weight to about 35% by weight of the shelf stable dairy product, starch in an amount of from at least about 0.5% by weight to about 4% by weight of the shelf stable dairy product, and gums in an amount of from at least about 0.01% by weight to about 0.5% by weight of the shelf stable dairy product.

At this point, Applicants have found that the addition of a solid binder, carboxymethylcellulose, works well in maintaining a homogenous system through easy dissolution and liquid absorption. Preferably, carboxymethylcellulose is added in the mixing vessel with the real cream cheese and preservative at a concentration of about 0.10 wt-% to 0.5 wt-% of the ultimate shelf stable dairy product. As will be seen, subsequent to the mixing of real cream cheese, solid water binder, and preservative, additional water binders, solid or liquid, may be added at any later mixing stages of the process.

Simultaneously or subsequently to the addition of a binder to mixing vessel 1, a preserving agent is, preferably, added to the mixing vessel 1. Just subsequent to or simultaneously with the addition of a binder, there typically is such an amount of liquid in the mixture that dissolution of a preserving agent can be facilitated. The liquid forms as the real cream cheese is heated and begins to separate. This liquid allows the preserving agent to be easily dissolved into the mixture of real cream cheese.

In general, a preserving agent can facilitate the inhibition of microbial growth. The amount of preserving agent to be added to the product can vary with the type of shelf stable dairy product desired, the type of preserving agent used, and the shelf stability required of the desired product. However, if too much preserving agent is used the organoleptic properties of the product, particularly taste and mouthfeel, may be sacrificed, and if too little preserving agent is used the product may not be sufficiently shelf stable. Preferably, at least 0.05 % by weight and not more than 0.35% by weight of the shelf stable dairy product is preserving agents. More preferably, at least 0.07% by weight to at least 0.25% by weight of the shelf stable dairy product is preserving agents. Most preferably, at least 0.075% to 0.15% by weight of the shelf stable dairy product is preserving agents.

Any food grade type of preserving agent may be utilized in the invention. Preferably, the preserving agent used does not provide an unacceptable taste or mouthfeel to the product. The preserving agent added at this processing stage can be sorbic acid, potassium sorbate, sodium sorbate, sodium propionate, calcium propionate, sodium benzoate, calcium benzoate, or mixtures thereof. Preferably, potassium sorbate is used as a preserving agent. Most preferably, potassium sorbate is added at this processing stage of the invention. Potassium sorbate is one preferred preserving agent because its $pK_a$ approximates the $pK_a$ of the cream cheese mixture at this stage of the process. Other preserving agents that also approach the $pK_a$ of the mixture are suitable for use at this stage of the process.

It is noted that mixing is continuous during the addition of ingredients to the mixing vessel 1. In addition, the heating means temperature should be maintained at the set point utilized to heat the real cream cheese. During the whole process of adding ingredients to the heated real cream cheese, the mixing should not be such that the protein in the real cream cheese is denatured or burned. Further, ingredients should be added in succession, with sufficient mixing in between to obtain homogeneity, in such a manner that the temperature of the real cream cheese mixture does not rise above about 60°C (140°F), and preferably the temperature should not rise above about 54°C (130°F).

Subsequent to the addition of a binder and a preserving agent to mixing vessel 1, the cream cheese mixture continues to be mixed. During mixing, the temperature of the shelf stable dairy product should be kept at a level to avoid burning the product. Further, the shear in the mixing vessel should remain low. The mix time and speed of mixing subsequent to adding a binder and a preserving agent but prior to the addition of other ingredients are typically dependent upon the type of mixing means used and the type of shelf stable dairy product desired. However, preferably, a mixing speed of at least about 15 rpm and not greater than 21 rpm, and a mix time of at least about 10 minutes and not greater than 35 minutes are utilized. More preferably, the mixture is mixed for about 10 minutes prior to the addition of other ingredients at a mix speed of about 18 rpm using a scraper type of mixing means.

After mixing the real cream cheese, preserving agent, and binder until homogeneous, liquid may be added to the cream cheese mixture in the mixing vessel 1. The liquids maintain the flowability of the mixture and/or the product, which facilitates processing and pumpability. The amount of liquids to be added to the mixing vessel 1 varies with the type of liquids to be added and the shelf stable dairy product desired. If too much liquid is added, then the mixture and/or the product may be insufficiently viscous, and if too little liquid is added at this stage, then the mixture and/or product may be too viscous and not sufficiently flowable. Preferably, liquids are added in an amount of at least about 5% by weight of the shelf stable dairy product and not greater than about 25% by weight of the shelf stable dairy product. More preferably about 5% by weight and not greater than about 15% by weight, and most preferably about 6% by weight and not greater than about 12% by weight of liquids are added to the mixture.

The types of liquids that are added to the mixture in the mixing vessel 1 vary with the type of end product desired and the types of other ingredients added to the mixture. Typically, liquid water binders and/or preserving agents are added to the mixture in mixing vessel 1. These types of liquids include: corn syrup, glycerine, tocopherol, or any other water binding or preserving ingredient in liquid form, and/or mixtures thereof. Under certain conditions, as more fully discussed below, water can also be added to the mixture in mixing vessel 1.

In a preferred embodiment, liquid binders are added to mixing vessel 1. One of the liquid binders is usually a liquid sugar or sweetening agent. Preferably, glycerine and high fructose corn syrup are the liquid binders added to the mixing vessel 1. Alternatively, in a preferred embodiment, water can be added in place of the high fructose corn syrup, when an increased amount of crystalline sugars or sweetening agents are added to the mixture to compensate for the sweetness lost in the product by not adding the high fructose corn syrup. In particular, dextrose and crystalline fructose, for example, could be added as dry ingredients to the mixture with water being added to make up the liquid balance.

If high fructose corn syrup and glycerine are added to the mixing vessel 1 in liquid form, then preferably, glycerine is added in an amount of at least about 1% by weight of the shelf stable dairy product and not greater than about 10% by weight of the shelf stable dairy product; and preferably high fructose corn syrup is added in an amount of at least about 5% by weight of the shelf stable dairy product and not greater than an amount of about 20% by weight of the shelf stable dairy product. More preferably, glycerine is added in an amount of at least about 3% by weight of the shelf stable dairy product and not greater than about 7.5% by weight, and high fructose corn syrup is added in an amount of at least about 11% by weight and not greater than about 17% by weight of the shelf stable dairy product. Most preferably, glycerine is added in an amount of at least about 3.5% by weight of the shelf stable dairy product and not greater than 7% by weight, and the high fructose corn syrup is added in an amount of from about 11% by weight to about 16% by weight. To the extent that high fructose corn syrup and glycerine are added to the shelf stable dairy product of the invention as liquids in the concentrations provided above, these constituents act as water binders and these concentrations can be attributed to the water binders on the basis of the composition as a whole.

**Blending Means**

Subsequent to the addition of liquids to the mixing vessel 1, the mixture continues to be mixed until homogenous at which time it is pumped from the mixing vessel 1, as depicted in the Figure, through pump 1 and valve 3 to a blending means 2.

Pumping means should be used to force the cream cheese mixture through the mixing recycle loop, and more particularly, from the mixing vessel 1 to the blending means 2. Pumping means suitable for forcing the cream cheese mixture from the blending means 2 and back into the mixing vessel 1 in order to move the mixture through the mixing recycle loop are usable in the invention.

Preferably, at least two high pressure pumps are used to move the cream cheese mixture through the mixing recycle loop. These pumps are depicted in the Figure as pump #1 and pump #2. Further, the pump (depicted as pump #1 in the Figure) moving the cream cheese mixture to the blending means 2 should be a high pressure pump, such as a positive displacement pump. A Waukasha pump #60 or its equivalent is usable in the invention.

The pumping means (depicted as pump #2 in the Figure) used to force the cream cheese mixture from the blending means 2 back into the mixing means 1 should run faster than the pumping means used to force the mixture from the mixing means 1 to the blending means 2 so that the cream cheese mixture will not stall and back up in the blending means 2. Generally, when Waukasha pump #60 type pumps are used, pump 1 will be run at low speed and pump 2 will be run at high speed. The piping between the mixing vessel and pump 1 generally has a diameter which allows for the transfer of the rough mixture to pump 1 with a 2-1.27cm (1/2 inch) diameter being that found most useful. The piping in the remaining portion of the circuit may be sized accordingly with a 5.08cm (2 inch) diameter being found useful for this portion of the circuit. If the cream cheese mixture is not continuously moved through this mixing recycle loop, then it can clog up in the system, burn and/or separate, which could make the product organoleptically and texturally unacceptable to an end consumer.

Blending means 2 may be utilized to incorporate dry ingredients into the cream cheese mixture. Applicants have found that the dry ingredients included in the shelf stable dairy product can be more fully and efficiently incorporated into the mixture if a portion of the dry ingredients are added via a blending means. Typically, if all of the dry ingredients are added to the mixture via the mixing vessel 1, then the resulting product is not sufficiently homogeneous. Therefore, Applicants have found that use of a blending means in the mixing recycle loop facilitates incorporation of a portion of the dry ingredients included in the product.

Preferably, a blending means, such as a centrifugal pump blender, which slowly incorporates ingredients into the cream cheese mixture as the mixture is being pumped through the blending means is used in the invention. However, any type of food grade blending means is usable in the invention. The blending means should be of a type that can withstand relatively high pressures because the cream cheese mixture will have to be pumped to the blending means under relatively high pressure. The blending means 2 in the Figure is depicted as a multiple blade mixer such as a Tri-Blender™. Most preferably, a Tri-Blender™ brand multiple blade mixer, Model F3218MD-B40, which is available from Ladish, Co., a division of Triclover, Inc. in Kenosha, Wisconsin is used.

As the cream cheese mixture is pumped through the mixing recycle loop, as depicted in the Figure, additional ingredients are added to the cream cheese mixture via the blending means 2 and the mixing vessel 1 in order to provide bulk to the mixture, to reduce the pH of the mixture, to reduce the water activity of the mixture, to preserve the mixture, to stabilize the mixture, and/or to sweeten the mixture. While the mixture is recycling through the mixing recycle loop, ingredients can be added either directly to the mixing vessel 1 or to the blending means 2 which then distributes the ingredients into the mixture. However, Applicants have found that efficiency and product quality mandate use of both the mixing vessel 1 and blending means 2 to add additional ingredients, as discussed below, to the mixture as its moving through the mixing recycle loop.

These additional ingredients can include additional sugars, additional preserving agents, buffers, acidulants, additional binders, flavoring agents, stabilizers and agents to facilitate improving the product's texture and organoleptic properties. More specifically, these final dry ingredients can include items such as powdered sucrose, cream cheese powder, modified corn starch, powdered sugar, salt, other flavorings, citric acid, sodium citrate, gums, and/or mixtures thereof. The amounts of these types of ingredients to be added can vary with the desired product and the types of additional dry ingredients used. These additional ingredients should facilitate improvement of the mouthfeel, pH, texture and organoleptic properties of the shelf stable dairy product.

Preferably, an acidulant is added to the mixture in blending means 2 as it is moving through the mixing recycle loop. An acidulant facilitates the reduction of the pH of the composition such that the shelf stable dairy product can have optimum preserving activity. A lower pH creates an environment that is more resistant to microbial growth. Generally, an acidulant is added to the shelf stable dairy product in order to adjust the pH level to about 2 to 5. Preferably, the pH of the cream cheese mixture is lowered to about 3 to about 4.5, and most preferably, the acidulant lowers the pH of the mixture to about 3.5 to about 4.0.

Typically, the desired pH is obtained by adding an overall amount of acidulant to the cream cheese composition of at least about 0.15% by weight and not greater than at least about 0.85% by weight. More preferably, an acidulant is added in an amount of at least about 0.20% by weight and in an amount of not greater than about 0.65% by weight. Most preferably, the acidulant is added in an amount of at least about 0.20% by weight and not greater than about 0.45% by weight of the shelf stable dairy product.

Any type of food grade acidulant that is capable of lowering the pH of the cream cheese mixture to a food grade pH is usable in the invention. Typically, the acidulant is a food grade acid, such as phosphoric acid, sulfuric acid, adipic acid, tartaric acid, succinic acid, acetic acid, fumaric acid, propionic acid, citric acid, malic acid, lactic acid and mixtures thereof. Preferably, citric acid is used as an acidulant as it provides an acceptable eating quality and does not adversely affect organoleptic properties of the final product.

Preferably, the acidulant is mixed with a bulking agent, such as a sugar, and added to the mixture via the blending means 2. As used herein the term "bulking agent" includes a starch and/or sugar usable in a shelf stable dairy product to thicken, provide texture, and/or provide taste or mouthfeel to the product. Typically, these bulking agents are also binders. Mixing an acidulant with a bulking agent can provide the acidulant with broader disbursement capabilities so the acidulant can be more evenly disbursed through out the cream cheese mixture.

In addition to an acidulant, preferably, a buffer is added to the mixture in blending means 2 as its moving through the mixing recycle loop. A buffer is generally regarded as a mixture of acid and conjugate base which, when added to a composition, will preclude substantial changes in pH with the addition of acid or alkali. In the claimed invention, any food grade buffer may be used. A buffer is added to the mixture in order to facilitate pH maintenance of the shelf stable dairy product during storage. Any type of food grade compound that can help to maintain the pH in a shelf stable dairy product is useable in the invention, such as buffers based in naturally occurring acids and acid-salts like citrates, tartarates, lactates, acetates, sorbates; buffers based in organic and inorganic acids and acid-salts such as phosphates, sulfates, carbonates, and benzoates, among others. Salts may comprise any food grade alkali and alkaline earth metals such as sodium, potassium, and hydrogen among others. Citrates are preferred with sodium citrate being the most preferred buffer.

The amount of buffer to be added to the mixture varies with the type of buffer used and the shelf stable dairy product desired. However, typically a buffer is added in an amount of at least about 0.1% and not greater than about 0.2% by weight of the shelf stable dairy product composition. As discussed previously with respect to the acidulant, preferably, the buffer is combined with a bulking agent prior to being added to the cream cheese mixture.

Preferably, dry cream cheese powder is added as an additional ingredient. Dry cream cheese powder is a good bulking agent that can provide the taste and texture of cream cheese. Cream cheese powder is also usable as a supplement to real cream cheese, and it can provide additional organoleptic and textural properties of cream cheese. The amount of cream cheese powder used in the composition varies with the desired end product. Preferably, if used, not less than about 0.1% by weight and not more than 15% by weight of the shelf stable dairy product is cream cheese powder. Preferably, if cream cheese powder is used, it is dried. More preferably, cream cheese powder is used in an amount of at least about 2% by weight and not greater than about 13% by weight of the shelf stable dairy product.

The dry cream cheese powder can be mixed with another bulking agent, such as a starch, prior to being added to the mixture. Further, any sugars, such as powdered sucrose or sugar, are added as an additional ingredient at this processing stage. Sugars provide taste, bulk and mouthfeel to the cream cheese mixture. If they are added to the mixture in a powdered form, then they are typically more easily mixed into the cream cheese mixture.

Flavorings, textural facilitators and color facilitators, optionally, are also added to the composition as additional ingredients. These optional ingredients preferably include salt, colorants, vanilla and any additional ingredients that make the product more organoleptically satisfactory. Preferably, if added at all, these items are added to the composition in an amount of at least about 0.1% by weight and in an amount of not greater than about 1% by weight of the cream cheese composition. More preferably, if added, these ingredients are added in an amount of at least about 0.1% by weight and in an amount of not greater than about 0.8% by weight, and most preferably, in an amount of at least about 0.1% by weight and not greater than 0.5% by weight of the cream cheese composition.

Preferably, a stabilizer is also added as an additional ingredient. The concentration of stabilizer may partially displace the concentration of water binder as a weight percent of the entire composition. A stabilizer can increase the viscosity of the mixture, provide a stabilizing affect when the product is under high heat, high shear, frozen temperatures and extreme pH levels. In addition, the stabilizer can provide freeze/thaw stability and facilitate an improved texture of the product.

Stabilizers usable in accord with the invention include gums, cellulose compounds, starch, and mixtures thereof. Preferably, the stabilizer added at this processing stage is a gum or gum blend. Usable gums include: xanthan gum, locust bean gum, guar gum and mixtures thereof.

In general, the amount of stabilizer to be added as an additional ingredient varies with the end product desired and the type of stabilizer used. If gums are used as a stabilizer, then preferably at least about 0.01% by weight of the shelf stable dairy product and not more than 0.5% by weight is gum. More preferably, at least about 0.02% by weight and not more than 0.4% by weight of the shelf stable dairy product is gum. When stabilizers are present in the composition of the invention, the concentrations, as provided above, represent a portion of the total concentration of water binder in view of the entire shelf stable composition.

In general, the overall amounts of these additional dry ingredients to be added to the mixture either by the blending means 2 or the mixing vessel 1, while the mixture is cycling through the mixing recycle loop, vary with the desired end product. Those dry ingredients which may not have been added to this point may include, for example, sugars or sucrose as water binders added in an amount of at least 5% by weight and not greater than about 35% by weight of the shelf stable dairy product. More preferably, the amount of sugars or sucrose added at this processing stage is at least about 5% by weight and not greater than about 30% by weight of the shelf stable dairy product. Preferably, salt as a flavoring in an amount of at least about 0.01% by weight of the shelf stable dairy product and not greater than about 0.8% by weight of the shelf stable dairy product is added to the mixture as it is moving through the recycle loop. Preferably, the stabilizer, such as gums, are added in an amount of at least about 0.01% by weight of the shelf stable dairy product and not greater than about 0.50% by weight. Preferably, dry water binders such as starch, may be added in an amount of at least about 0.5 % by weight and not greater than about 4% by weight of the shelf stable dairy product. Any flavorings other than salt, preferably, are added in an amount of at least 0.01% by weight and not greater than 0.9% by weight of the shelf stable dairy product.

Efficiency should determine whether these additional dry ingredients are added to the cream cheese mixture using the blending means, such as multiple-blade mixer 2, or the mixing vessel 1. Preferably, of these additional dry ingredients, those that are added in the smallest amounts will be mixed prior to being added to the blending means or the mixing vessel with a dry ingredient that is being added in a larger amount. Therefore, the ingredient being added in a smaller amount can be more evenly disbursed through out the mixture. Further, it is generally preferable to mix some of these additional ingredients that will be added in smaller amounts with each other prior to adding them to the mixing vessel 1 or the blending means 2 so that they can be more easily disbursed and not dissolve in only one location within the mixture.

In a more preferred embodiment, a portion of the sugars or sucrose added with these additional dry ingredients is mixed with any acidulants, gums, salt, or other flavorings prior to being added to the blending means for addition to the cream cheese mixture. The remaining portion of the sugars or sucrose, preferably, is added to the mixing vessel while the cream cheese mixture is being recycled through the mixing recycle loop. Further, any cream cheese powder is added to a water binder, such as a starch, prior to being added to the blending means for addition to the cream cheese mixture. This premixing of ingredients facilitates uniform mixing of the cream cheese mixture.

In a most preferred embodiment, a mixture containing, if any, about 0.1% by weight of the shelf stable dairy product to about 15% by weight dry cream cheese powder and about 0.5% by weight of the shelf stable dairy product to about 2.5% by weight modified corn starch is premixed and added to the cream cheese mixture via the blending means, such as a multiple blade blender. Subsequently, preferably, a mixture of from about 2.5% by weight to about 9% by weight of the shelf stable dairy product powdered sugar, from about 0.1% by weight of the shelf stable dairy product to about 1% by weight salt, from about 0.1% by weight of the shelf stable dairy product to about 0.5% by weight citric acid, and from about 0.01% by weight to about 0.5% by weight binders, such as gums, is premixed and added to the cream cheese mixture via the blending means.

The following Table represents overall useful, working, and preferred weight percentages of ingredients in accord with at least one embodiment of the invention.

TABLE 1

| Cream Cheese Product | | | |
|---|---|---|---|
|  | Useful | Working | Preferred |
| Real Cream Cheese | 55 - 80% | 60 - 80% | 60 - 65% |
| Water Binder | 20 - 50 | 20 - 40 | 25 - 35 |
| Preserving Agent | 0.05 - 1 | 0.05 - 0.35 | 0.07 - 0.25 |
| Acidulant | 0.1 - 0.85 | 0.15 - 0.85 | 0.20 - 0.65 |
| Flavoring | 0 - 2 | 0.1 - 1 | 0.1 - 0.8 |

Once all of the ingredients have been added to the cream cheese mixture, the mixture is continuously pumped through the mixing recycle loop until uniformly mixed and homogenous. In general, this mixture is pumped for about 5 minutes to 15 minutes or until well mixed. Care should be taken that the temperature of the cream cheese mixture during mixing does not rise to more than about 54°C (130°F) in order to minimize separation of the mixture and loss of mixture and/or product integrity.

The temperature of the mixture while recycling through the mixing recycle loop (from the mixing vessel 1, through pump #1, through a valve 3, through a blending means 2, through pump #2 and back into the mixing vessel 1) is typically of a temperature between about 32°C (90°F) and about 54°C (130°F), and more typically between about 32°C (90°F) and 49°C (120°F). Maintaining the temperature between these ranges permits adequate mixing of the ingredients without significantly denaturing the protein component of the mixture.

**Processing Recycle Loop**

As the temperature of the mixture begins to rise to about 49-54°C (120°F to 130°F), and as the mixture is fully mixed, it is pumped from the mixing recycle loop through valve 3, to a holding vessel in the processing recycle loop. The mixture may also be pumped to holding vessel 4 through valve 9. The processing recycle loop involves moving the cream cheese mixture from holding vessel 4, through pump #3, optionally through a deaeration system 5, optionally through a filtration system 6, through a homogenization system 7, and through a cooling system 8 as depicted in the Figure. The holding vessel provides a location for which the cream cheese mixture can cool prior to being further processed. Any holding type of vessel with a mixing means and of food grade is usable in the invention. Typically, the cream cheese mixture is sufficiently viscous that a pumping time of about 15 minutes to 60 minutes is required in order to move all of the cream cheese mixture from the mixing vessel 1 and mixing recycle loop to the holding vessel 4. The holding vessel 4 can be the same type of vessel used as the mixing vessel 1, such as a swept surface kettle. A holding vessel usable in the invention is the Lee Kettle, which is available from Lee Metal Products in Philadelphia, Pennsylvania. The holding vessel 4 does not need to have a heating means because its goal is to cool the mixture to between about 46°C and about 49°C (about 115°F and about 120°F) in order to stabilize it in preparation for any deaeration, filtration and / or homogenization processes.

Further, an additional pump (pump #3 in the Figure), which is analogous to pump #1 and/or pump #2, can be used to move the mixture from the holding vessel 4 through to the other operations in the processing recycle loop. As depicted in the Figure by dashed lines, the deaeration and filtration systems are optional processing operations for the shelf stable dairy products of the present invention.

**Homogenization System**

Subsequent to being pumped from the holding vessel 4, the cream cheese mixture is pumped through a homogenization system 7 in the processing recycle loop, as depicted in the Figure. Unlike the filtration and deaeration systems, the homogenization system is necessary to achieve the compositions of the invention. Homogenization physically resets the cream cheese mixture for greater stability and uniformity during the product storage.

Generally, any type of food grade homogenization system is usable in the invention. Typically, a pump-type homogenizer is used in the system. Homogenization of the cream cheese mixture requires a high pressure process. The mixture can be homogenized by pumping it through one or more high pressure pumps. Preferably, the homogenization of the cream cheese takes place in a two stage homogenizer under a cumulative pressure of at least 6.2MPa (900 psi) and not greater than 8.27MPa (1200 psi). In one embodiment, the first stage of the homogenizer is a high pressure feed pump which supplies a minimum of 3.44MPa (500 psi) to the mixture, which is then fed to the second stage of the homogenizer which supplies between 2.75 to 4.82MPa (400 and 700 psi). More preferably, the homogenization pressure is at least 6.55MPa (950 psi) and not greater than 7.59MPa (1100 psi), with the first stage supplying 3.44MPa (500 psi) and the second stage supplying 3.1 to 4.13MPa (450 to 600 psi). An example of homogenization system usable in the invention is two pumps that can obtain a sufficient pressure to homogenize the mixture.

**Cooling System**

When the cream cheese mixture exits the homogenization system 7, it may be pumped to a cooling system 8 as depicted in the processing recycle loop of the Figure. The cooling system provides a means for the cream cheese mixture to cool prior to being included in other foods to make a final product. Typically, any food grade cooling system within the scope of the invention includes a food grade heat exchanger that it capable of cooing the cream cheese mixture to not greater than about 32°C (90°F) in order to form a shelf stable dairy product within the scope of the invention. Preferably, the cooling tubes included in the heat exchanger are swept surface types with swept surface blades that are capable of rapidly cooling cream cheese mixtures to between about 24°C and 29°C (about 75°F and 85°F). An example of a suitable cooling system is available from Crepaco Inc., using brine at a temperature of about -1°C to 4°C (30 - 40°F) as the cooling medium.

In one embodiment, one or more heated or unheated return lines and pumps are provided in the processing recycle loop, connecting various systems directly to the holding vessel. These return lines and pumps can serve to return overflow from a particular system back to the holding vessel. The return lines may also function to keep the shelf stable dairy product within the desired temperature ranges and/or in constant motion while other parts of the line are stopped for cleaning or repairing. Maintaining the shelf stable dairy product at certain temperatures and/or in constant motion prevents the product from forming lumps or agglomerates.

Upon exit from the cooling system the shelf stable dairy product is then usable in food products requiring a cream cheese. The shelf stable dairy product can be stored for up to eight weeks prior to being added to a bakery or other food product. Preferably, the shelf stable dairy product is stored during this time in a container that is not permeable to light in order to avoid significant photo oxidation or deterioration of the product.

The resulting shelf stable dairy product is shelf stable and organoleptically and texturally acceptable to the end user. Further, a shelf stable dairy product of the invention preferably has a viscosity of at least about 144Pas (144,000 cps) and not greater than about 176Pas (176,000 cps), as determined by using a Brookfield Viscometer, Model LV, with Spindle #2 set at 100 rpm for 3 minutes, 50 rpm for 30 seconds, 20 rpm for 30 seconds and 10 rpm for 30 seconds, and taking the viscosity measurement after the final spin.

### Filtration System

Optionally, the cream cheese mixture can be pumped from the holding vessel 4, once it has reached the reduced temperature, through a filtration system 6 as depicted in the Figure. Although in the Figure the filtration system is depicted as being subsequent to the deaeration system 5, the filtration system 6 can be placed anywhere in the processing recycle loop subsequent to the holding vessel 4. The filtration system can remove any lumps or textural inconsistencies from the composition. Any food grade type of filtration system is usable with the invention. Preferably, the filtration system is an inline system. Further, the filtration system can be placed anywhere in the process subsequent to the holding vessel. In one embodiment, an in-line, double mesh canister filter, having mesh sizes decreasing from about 0.95cm to 0.16cm (about 3/8 inch to 1/16 inch), is used. Any number of filtration known to those of skill in the art can be used.

### Deaeration System

Optionally, the cream cheese mixture can be pumped through a deaeration type of process subsequent to being pumped from the holding vessel 4. Both the deaeration and filtration systems are optional operations in the processing recycle loop.
A deaeration or dispersator system removes air from the cream cheese mixture, which facilitates stability and discourages microbial growth. In general, pumping the compositions of the invention through a deaeration system increases the shelf life of the final product.
Any type of deaeration system that is usable in a food grade process is usable in the invention. Typically, a deaeration system includes a fast moving centrifugal drum, which utilizes centrifugal force to compress the mixture, and a vacuum source which applies a vacuum to the drum to pull air out, resulting in a deaerated mixture. One type of deaeration system that can be used is available from Cornell, Inc. in Springfield, NJ, and is known as a Model D16. In one embodiment of the invention, the deaeration system may be part of an internal circuit where the mixture is pumped back to the holding vessel. This will prevent the mixture from hardening in the line if subsequent processing steps are temporarily shut down. In this case, pump 3 may be positioned in this internal loop between the deaeration system and the holding vessel.

### Methods of Preservation

The invention is also directed to a method for preserving a dairy product. To prepare a shelf stable dairy product of the present invention, a dairy product is mixed with an amount of a water finder effective to lower $A_w$ to below 0.91, and optionally, an effective preserving amount of a preservative and an acidulant to adjust the pH to about 2 to 5. Preferably, the freezing point depressant comprises about 2-10% by weight glycerine based on the total weight of the shelf stable dairy product. Optionally, the method of preserving the dairy product can further comprise contacting the diary product with a stabilizer. Preferably, the stabilizer comprises about 0.01 to 0.9% by weight of one or more stabilizers selected from the group consisting of starch, xanthan gum, locust bean gum, and guar gum. More preferably, the cellulose compound is selected from the group consisting of carboxymethyl cellulose, carboxyethyl cellulose, and carboxypropyl cellulose. In a preferred embodiment, the cellulose compound is carboxymethyl cellulose.

### Food Products

The invention is also directed toward the preparation of a food product which includes a shelf stable dairy product in accord with the invention. Examples of food products using the shelf stable dairy product of the invention include: bakery products such as turnovers, pastries and danishes, strudel (prepared by any number of means including baking, microwaving or frying), bagels, doughnuts and sweet or savory filled pies, all of which can be prepared using any conventional means. An example of a food product suitable for use with the shelf stable dairy product of the present invention is the pastry product described in U.S. Patent 4,623,542.

### WORKING EXAMPLES

The following working examples serve to illustrate, but not limit the compositions and methods of this invention. Working Examples 1-6 show various exemplary cream cheese compositions formulated in accordance with the invention.

| WORKING EXAMPLE 1 | |
|---|---|
| Ingredient | % |
| Cream Cheese | 71.88 |
| High Fructose Corn Syrup | 11.14 |
| Glycerine | 5.00 |
| Salt | .40 |
| Sucrose | 8.93 |
| Potassium Sorbate | 0.10 |
| Citric Acid | 0.35 |
| Gum Blends | 0.15 |
| Carboxymethyl Cellulose | 0.30 |
| Dried Cream Cheese ® | 0.00 |
| Modified Corn Starch Ultrasperse from National Starch and Chemical Company | 1.75 |
| | 100.00% |

| WORKING EXAMPLE 2 | |
|---|---|
| Ingredient | % |
| Cream Cheese | 61.88 |
| High Fructose Corn Syrup | 11.14 |
| Glycerine | 5.00 |
| Salt | .40 |
| Sucrose | 13.93 |
| Potassium Sorbate | .10 |
| Citric Acid | .35 |
| Gum Blends | .15 |
| Carboxymethyl Cellulose | .30 |
| Dried Cream Cheese ® | 5.00 |
| Modified Corn Starch Ultrasperse from National Starch and Chemical Company | 1.75 |
| | 100.00% |

| WORKING EXAMPLE 3 | |
|---|---|
| Ingredient | % |
| Cream Cheese | 51.88 |
| High Fructose Corn Syrup | 16.14 |
| Glycerine | 5.00 |
| Salt | 0.40 |
| Sucrose | 13.93 |
| Potassium Sorbate | 0.10 |
| Citric Acid | 0.35 |
| Gum Blends | 0.15 |
| Carboxymethyl Cellulose | 0.30 |
| Dried Cream Cheese ® | 10.00 |
| Modified Corn Starch Ultrasperse from National Starch and Chemical Company | 1.75 |
| | 100.00% |

...

| WORKING EXAMPLE 4 | |
|---|---|
| Ingredient | % |
| Cream Cheese | 63.75 |
| High Fructose Corn Syrup | 15.30 |
| Glycerine | 5.00 |
| Salt | .40 |
| Sucrose | 8.83 |
| Potassium Sorbate | .10 |
| Citric Acid | .35 |
| Gum Blends | .15 |
| Carboxymethyl Cellulose | .30 |
| Dried Cream Cheese ® | 4.07 |
| Modified Corn Starch Ultrasperse from National Starch and Chemical Company | 1.75 |
| | 100.00% |

| WORKING EXAMPLE 5 | |
|---|---|
| Ingredient | % |
| Cream Cheese | 63.75 |
| High Fructose Corn Syrup | 19.47 |
| Glycerine | 5.00 |
| Salt | 0.40 |
| Sucrose | 8.83 |
| Potassium Sorbate | 0.10 |
| Citric Acid | 0.35 |
| Gum Blends | 0.15 |
| Carboxymethyl Cellulose ® | 0.20 |
| Modified Corn Starch Ultrasperse from National Starch and Chemical Company | 1.75 |
| | 100.00 |

| WORKING EXAMPLE 6 | |
|---|---|
| Ingredient | % |
| Cream Cheese | 61.88 |
| Water | 3.23 |
| Dextrose | 2.81 |
| Fructose | 4.80 |
| Glycerine | 5.00 |
| Salt | 0.40 |
| Sucrose | 14.13 |
| Potassium Sorbate | 0.10 |
| Citric Acid | 0.35 |
| Gum Blends | 0.15 |
| Carboxymethyl Cellulose | 0.30 |
| Redried Cream Cheese | 5.00 |
| Sodium Citrate ® | 0.1 |
| Modified Corn Starch Ultrasperse from National Starch and Chemical Company | 1.75 |
| | 100.00 |

Shelf Stability

In accordance with the invention, a cream cheese filling comprising about 64% cream cheese, about 19% high fructose corn syrup, about 5% glycerol, about 0.6% salt, about 9.4% sucrose, about 0.35% citric acid, about 0.15% of a gum blend, about 1% modified corn starch and about 0.1% potassium sorbate as a preserving agent was inoculated with Staphylococcus aureus and Salmonella at 25°C and 32°C. The cream cheese samples were tested regularly for eight weeks. The study showed that there was no regular yeast or regular mold growth at 25°C or 32°C. Additionally, there was no recovery of the Staphylococcus aureus and Salmonella organisms after 3 days. The initial plate count remained static throughout the eight weeks of the study. These results demonstrate that the cream cheese filling is shelf stable at 25°C and 32°C for 8 weeks.

**Claims**

1. A method for making a shelf stable dairy product comprising cream cheese, which comprises:

   (a) heating real cream cheese in a vessel in order to form heated real cream cheese to a temperature which is less than the protein denaturisation temperature of said cream cheese;

   (b) forming a mixture, said mixture comprising the heated real cream cheese; and

   (c) homogenizing said mixture to form a shelf stable dairy product.

2. A method as claimed in claim 1, in which the mixture comprises real cream cheese in an amount of from at least 55% by weight to 80% by weight of the shelf stable dairy product, preferably in an amount of from at least 60% by weight to 80% by weight of the shelf stable dairy product.

3. A method as claimed in claim 1, in which the step of heating comprises heating the real cream cheese to a temperature of at least 32°C (90°F).

4. A method as claimed in claim 1, in which the step of forming the mixture comprises pumping the mixture through a mixing recycle loop.

5. A method as claimed in claim 1, in which the step of homogenizing is performed at a pressure of at least 6.2 MPa (900 psi) and at a pressure not greater than 7.5 MPa (1100 psi).

6. A method as claimed in claim 5, in which the step of homogenizing includes pumping the mixture through a two stage homogenizer.

7. A method as claimed in claim 6, in which the step of pumping the mixture comprises pumping the cream cheese mixture at a temperature of at least 32°C (90°F) and not greater than 43°C (110°F).

8. A method as claimed in claim 1, which includes at least one of the steps:

   (a) of pumping the mixture into a holding vessel,

   (b) of pumping the mixture through a deaeration system,

   (c) of pumping the mixture through a filtration system, and

   (d) of pumping the mixture through a cooling system, which preferably comprises a heat exchanger.

9. A method as claimed in claim 1 (wherein:

   step (a) comprises heating real cream cheese in a vessel to a temperature of at least 32°C (90°F) and not greater than 49°C (110°F) to form heated real cream cheese;
   step (b) comprises admixing in the vessel binders and a preserving agent with the heated real cream cheese to form a cream cheese mixture, in which the cream cheese mixture comprises:

(i) real cream cheese in an amount of from at least 55% by weight to 80% by weight of the cream cheese mixture;
(ii) a preserving agent in an amount of from 0.05% by weight to 0.35% by weight of the shelf stable dairy product;
(iii) a binder in the form of a dry powder;
(iv) a binder in the form of a liquid;

step (c) comprises homogenizing the cream cheese mixture at a pressure of at least 6.2 MPa (900 psi) and of not greater than 7.5 MPa (1100 psi) to form a shelf stable dairy product)
and wherein the method further comprises:
(d) pumping the cream cheese mixture through a
blending means; and
(e) pumping the cream cheese mixture into a holding vessel in which the cream cheese mixture cools to a temperature of not greater than 49°C (120°F).

10. A method as claimed in claim 9, which includes the step of pumping the cream cheese mixture through at least one of (a) a filtration system, and (b) a deaeration system.

11. A method as claimed in claim 9, which includes the step of cooling the cream cheese mixture to a temperature of at least 29°C (85°F) and to not less than 18°C (65°F).

12. A method as claimed in claim 9, in which the step of pumping the cream cheese mixture through a blending means comprises pumping the cream cheese through a multiple blade blender.

13. A method as claimed in claim 12, in which the step of pumping the cream cheese through a multiple blade blender comprises pumping the cream cheese mixture through a recycle loop, the recycle loop comprising the vessel.

14. A method as claimed in claim 9, in which the step of heating the real cream cheese in a vessel includes heating the cream cheese in a vessel having heating and mixing means.

**Patentansprüche**

1. Verfahren zur Herstellung eines lagerbeständigen Molkereiprodukts, das Rahmkäse umfaßt, das umfaßt:

(a) Erwärmen von echten Rahmkäse in einem Gefäß auf eine Temperatur, die geringer als die Denaturierungstemperatur des Proteins des Rahmkäses ist, um erwärmten echten Rahmkäse zu bilden;

(b) Bilden einer Mischung, wobei die Mischung den erwärmten echten Rahmkäse umfaßt; und

(c) Homogenisieren der Mischung zur Bildung eines lagerbeständigen Molkereiprodukts.

2. Verfahren, wie in Anspruch 1 beansprucht wird, bei dem die Mischung echten Rahmkäse in einer Menge von zumindest 55 Gewichts% bis 80 Gewichts% des lagerbeständigen Molkereiprodukts, vorzugsweise in einer Menge von zumindest 60 Gewichts% bis 80 Gewichts% des lagerbeständigen Molkereiprodukts umfaßt.

3. Verfahren, wie in Anspruch 1 beansprucht wird, bei dem der Schritt des Erwärmens das Erwärmen des echten Rahmkäses auf eine Temperatur von zumindest 32 °C (90 °F) umfaßt.

4. Verfahren, wie in Anspruch 1 beansprucht wird, bei dem der Schritt der Bildung der Mischung das Pumpen der Mischung durch eine Mischumlaufschleife umfaßt.

5. Verfahren, wie in Anspruch 1 beansprucht wird, bei dem der Schritt des Homogenisierens bei einem Druck von zumindest 6,2 MPa (900 psi) und einem Druck von nicht mehr als 7,5 MPa (1100 psi) durchgeführt wird.

6. Verfahren, wie in Anspruch 5 beansprucht wird, bei dem der Schritt des Homogenisierens das Pumpen der Mischung durch einen Zweistufenhomogenisator umfaßt.

7. Verfahren, wie in Anspruch 6 beansprucht wird, bei dem der Schritt des Pumpens der Mischung das Pumpen der Rahmkäsemischung bei einer Temperatur von zumindest 32 °C (90 °F) und nicht mehr als 43 °C (110 °F) umfaßt.

8. Verfahren, wie in Anspruch 1 beansprucht wird, das zumindest einen der Schritte umfaßt:

(a) Pumpen der Mischung in ein Vorratsgefäß;
(b) Pumpen der Mischung durch ein Entlüftungssystem,
(c) Pumpen der Mischung durch ein Filtrationssystem, und
(d) Pumpen der Mischung durch ein Kühlsystem, das vorzugsweise einen Wärmetauscher umfaßt.

9. Verfahren, wie in Anspruch 1 beansprucht wird, (in dem

Schritt (a) das Erwärmen von echtem Rahmkäse in einem Gefäß auf eine Temperatur von zumindest 32 °C (90 °F) und nicht mehr als 49 °C (110 °F) zur Bildung von erwärmten echten Rahmkäse umfaßt;

Schritt (b) das Vermischen im Gefäß von Bindemitteln und Konservierungsmittel mit dem erwärmten echten Rahmkäse zur Bildung einer Rahmkäsemischung umfaßt, wobei die Rahmkäsemischung umfaßt:

(i) echten Rahmkäse in einer Menge von zumindest 55 Gewichts% bis 80 Gewichts% der Rahmkäsemischung;
(ii) ein Konservierungsmittel in einer Menge von 0,05 Gewichts% bis 0,35 Gewichts% des lagerbeständigen Molkereiprodukts;
(iii) ein Bindemittel in Form eines Trockenpulvers;
(iv) ein Bindemittel in Form einer Flüssigkeit;

Schritt (c) das Homogenisieren der Rahmkäsemischung bei einem Druck von zumindest 6,2 MPa (900 psi) und nicht mehr als 7,5 MPa (1100 psi) zur Bildung eines lagerbeständigen Molkereiprodukts umfaßt;)
und wobei das Verfahren des weiteren umfaßt:

(d) Pumpen der Rahmkäsemischung durch ein Mischmittel; und

(e) Pumpen der Rahmkäsemischung in ein Vorratsgefäß, in dem die Rahmkäsemischung auf eine Temperatur von nicht mehr als 49 °C (120 °F) abkühlt.

10. Verfahren, wie in Anspruch 9 beansprucht wird, das den Schritt des Pumpens der Rahmkäsemischung durch zumindest eines aus (a) einem Filtrationssystem und (b) einem Entlüftungssystem umfaßt.

11. Verfahren, wie in Anspruch 9 beansprucht wird, das den Schritt des Kühlens der Rahmkäsemischung auf eine Temperatur von zumindest 29 °C (85 °F) und nicht weniger als 18 °C (65 °F) umfaßt.

12. Verfahren, wie in Anspruch 9 beansprucht wird, bei dem der Schritt des Pumpens der Rahmkäsemischung durch ein Mischmittel das Pumpen des Rahmkäses durch einen Vielfachblattmischer umfaßt.

13. Verfahren, wie in Anspruch 12 beansprucht wird, bei dem der Schritt des Pumpens des Rahmkäses durch einen Vielfachblattmischer das Pumpen der Rahmkäsemischung durch eine Umlaufschleife umfaßt, wobei die Umlaufschleife das Gefäß umfaßt.

14. Verfahren, wie in Anspruch 9 beansprucht wird, bei dem der Schritt des Erwärmens des echten Rahmkäses in einem Gefäß das Erwärmen des Rahmkäses in einem Gefäß mit Heiz- und Mischmittel umfaßt.

**Revendications**

1. Procédé de fabrication d'un produit laitier stable au stockage comprenant du fromage frais, qui comprend :

(a) le chauffage de vrai fromage frais dans un récipient pour former du vrai fromage frais chauffé à une température qui est inférieure à la température de dénaturation des protéines dudit fromage frais;
(b) la formation d'un mélange, ledit mélange comprenant le vrai fromage frais chauffé; et

(c) l'homogénéisation dudit mélange pour former un produit laitier stable au stockage.

2. Procédé selon la revendication 1, dans lequel le mélange comprend du vrai fromage frais en quantité d'au moins 55% à 80% en poids du produit laitier stable au stockage, de préférence en quantité d'au moins 60% à 80% en poids du produit laitier stable au stockage.

3. Procédé selon la revendication 1, dans lequel l'étape de chauffage comprend le chauffage du vrai fromage frais à une température d'au moins 32°C (90°F).

4. Procédé selon la revendication 1, dans lequel l'étape de formation du mélange comprend le pompage du mélange à travers une boucle de recyclage du mélange.

5. Procédé selon la revendication 1, dans lequel l'étape d'homogénéisation s'effectue à une pression d'au moins 6,2 MPa (900 psi) et à une pression qui n'est pas supérieure à 7,5 MPa (1100 psi).

6. Procédé selon la revendication 5, dans lequel l'étape d'homogénéisation comprend le pompage du mélange à travers un homogénéisateur à deux étages.

7. Procédé selon la revendication 6, dans lequel l'étape du pompage du mélange comprend le pompage du mélange de fromage frais à une température d'au moins 32°C (90°F) et qui n'est supérieure à 43°C (110°F).

8. Procédé selon la revendication 1, qui comprend au moins une des étapes :

(a) de pompage du mélange dans un récipient de retenue,
(b) de pompage du mélange à travers un système de désaération,
(c) de pompage du mélange à travers un système de filtration, et
(d) de pompage du mélange à travers un système de refroidissement, qui comprend de préférence un échangeur de chaleur.

9. Procédé selon la revendication 1 dans lequel:

l'étape (a) comprend le chauffage de vrai fromage frais dans un récipient à une température d'au moins 32°C (90°F) et qui n'est pas supérieure à 49°C (110°F) pour former du vrai fromage frais chauffé;
l'étape (b) comprend le mélange dans le récipient d'agents liants et d'un agent conservateur avec le vrai fromage frais chauffé pour former un mélange de fromage frais, dans lequel le mélange de fromage frais comprend:

(i) du vrai fromage frais en quantité de au moins 55% à 80% en poids du mélange de fromage frais,
(ii) un agent conservateur en quantité de 0,05% à 0,35% en poids du produit laitier stable au stockage,
(iii) un agent liant sous la forme d'une poudre sèche,
(iv) un agent liant sous la forme d'un liquide,

l'étape (c) comprend l'homogénéisation du mélange de fromage frais à une pression d'au moins 6,2 MPa (900 psi) et qui n'est pas supérieure à 7,5 MPa (1100 psi) pour former un produit laitier stable au stockage, et dans lequel le procédé comprend en outre
(d) le pompage du mélange de fromage frais à travers un moyen de mélange, et
(e) le pompage du mélange de fromage frais dans un récipient de retenue dans lequel le mélange de fromage frais se refroidit à une température qui n'est pas supérieure à 49°C (120°F).

10. Procédé selon la revendication 9, qui comprend l'étape de pompage du mélange de fromage frais à travers au moins (a) un système de filtration et (b) un système de désaération.

11. Procédé selon la revendication 9, qui comprend l'étape de refroidissement du mélange de fromage frais à une température d'au moins 29°C (85°F) et pas inférieure à 18°C (65°F).

12. Procédé selon la revendication 9, dans lequel l'étape de pompage du mélange de fromage frais à travers un moyen de mélange comprend le pompage du fromage frais à travers un mélangeur à lames multiples.

**13.** Procédé selon la revendication 12, dans lequel l'étape de pompage du fromage frais à travers un mélangeur à lames multiples comprend le pompage du mélange de fromage frais à travers une boucle de recyclage, la boucle de recyclage comprenant le récipient.

**14.** Procédé selon la revendication 9, dans lequel l'étape de chauffage du vrai fromage frais dans un récipient comprend le chauffage du fromage frais dans un récipient qui a un moyen de chauffage et un moyen de mélange.

MIXING RECYCLE LOOP

(REAL CREAM CHEESE + LIQUIDS + DRY INGREDIENTS)

MIXING VESSEL (18 RPM) 1

PUMP 1

ADDITIONAL DRY INGREDIENTS

VALVE 9

PUMP 2

VALVE 3

MULTIBLADE MIXER 2

PROCESSING RECYCLE LOOP

FINISHED CREAM CHEESE PRODUCT

VALVE

HOLDING VESSEL (18 RPM) 4
47°C (117°F)

DEAERATION SYSTEM 5

FILTRATION SYSTEM 6

COOLING SYSTEM 8

HOMOGENIZATION STAGE 7
2 STAGE / 6.9 MPa
(1000 psi)

PUMP 3